# EUROPEAN PATENT SPECIFICATION

(11) **EP 3 430 951 B1**
(45) Date of publication and mention of the grant of the patent: **01.04.2020**
(21) Application number: 18181974.9
(22) Date of filing: 05.07.2018
(51) Int. Cl.: A47J 31/36, A47J 31/52, A47J 31/54

(54) **DEVICE AND PROCESS FOR CONTROLLING THE EXTRACTION PRESSURE OF COFFEE IN AN ESPRESSO COFFEE MACHINE**
VORRICHTUNG UND VERFAHREN ZUR STEUERUNG DES EXTRAKTIONSDRUCKS VON KAFFEE IN EINER ESPRESSOMASCHINE
DISPOSITIF ET PROCÉDÉ POUR RÉGULER LA PRESSION D'EXTRACTION DE CAFÉ DANS UNE MACHINE À CAFÉ EXPRESSO

(30) Priority: 18.07.2017 IT 201700081412
(43) Date of publication of application: 23.01.2019
(60) Divisional application: 19220221.6
(73) Proprietor: Carimali S.p.A., 24121 Bergamo (IT)
(72) Inventor: CAPPELLINI, Davide, 26029 Soncino (IT)
(74) Representative: Giannini, Manuela

(56) References cited:
- EP-A1- 2 314 183
- WO-A1-2015/056241

## Description

The present invention relates in general to an espresso coffee machine and, in particular, to a device and a process for controlling the extraction pressure of coffee in an espresso coffee machine.

Espresso coffee is a beverage obtained starting from coffee powder. The coffee powder for preparing espresso coffee is obtained through grinding roasted coffee beans. The process for preparing an espresso coffee typically takes place through three different steps. A first step, so-called flooding or pre-brewing, envisages filling with water the interstitial cavities of the layer of coffee powder, so as to prevent a subsequent jet of pressurised water from indenting the surface of the layer. A second step, so-called extraction step, envisages the passage of water at optimal pressure and temperature through the layer of coffee powder. The extraction process is very complex and involves different chemical and physical phenomena. Finally, the dispensing ends with the emulsion process of the oils extracted in the previous step, through which the beverage assumes the creamy appearance that distinguishes it.

In order to perform the espresso coffee production process, specific apparatuses are used called espresso coffee machines. One of the first models of espresso coffee machine is disclosed in US 726793, filed in 1902, which describes an apparatus that allows the water coming from a boiler under pressure to be forced through the ground coffee powder, which is located in a specific perforated container. The improvements developed over time have constantly led towards the temperature and pressure generated by these apparatuses reaching the ideal conditions to obtain a maximum quality beverage. In fact, the espresso coffee produced with current apparatuses differs considerably from that obtained with the apparatus disclosed in US 726793.

In order to force the passage of hot water through the coffee powder, apparatuses of the type described in US 726793 use the thrust of the pressure generated by a saturated steam boiler. This pressure has a value comprised between about 1 bar and about 1.5 bar. In these apparatuses the pressure is connected with the temperature of the boiler from the Mollier diagram. Since to obtain a good quality beverage the water for its production must not exceed 100°C, the coffee obtained with these apparatuses tends to have a "burned" flavour. The extraction pressure of the coffee is therefore a compromise between the need to optimise the thrust for forcing the water through the coffee powder and the need not to reach certain temperature values, which would make the beverage unacceptably "burned".

Attempts to improve the coffee extraction process have over time led to the development of increasingly efficient devices for generating the water pressure. Some pressure generation devices are disclosed, for example, in CH 262232 and US 2878747. Document US 3119322 instead describes an espresso coffee machine with which it is possible to considerably increase the pressure with which the water is forced to pass through the coffee powder, independently from the temperature. In detail, CH 262232 describes an espresso coffee machine of the so-called lever type, where the pressure is given to the water by a piston manoeuvred through a lever and pushed by a spring. US 2878747 describes an espresso coffee machine of the hydraulic type, where the pressure is given to the water by a piston activated through a hydraulic actuator. US 3119322 finally describes an espresso coffee machine where the pressure is generated by a rotary pump. With respect to espresso coffee machines of the previous generation, the characteristics of the beverage have been completely reviewed.

The espresso coffee machine described in US 3119322, which is provided with a pump that directly generates the desired pressure, is the one that over time has become consolidated as the simplest and most efficient. In fact, all modern espresso coffee machines operate with a pump that directly forces the passage of the hot water through the coffee powder.

However, the first applications of pump systems have led to a focus on the phenomenon by which, to obtain a good quality beverage, before applying the thrust of the pump it was necessary to flood the ground coffee powder for some seconds with water at low pressure (flooding or pre-brewing step). In lever machines and in hydraulic ones this process took place automatically during the step of raising the piston, when the water coming from the heater, at a pressure of less than 1.5 bar, flooded the compression chamber under the bottom of which the filter for the coffee powder was located.

To ensure that the dispensing cycle is started with a flooding step at low pressure it was therefore necessary to resort to measures and devices of the type disclosed in US 3230974. A similar device is known as a brewing valve. Starting from the brewing valve described in US 3230974 and up to now, every new espresso coffee machine has had the need to realise this initial pre-brewing step, which consists of wetting the coffee powder without applying a significant extraction pressure.

In more recent times, thanks to the greater spread and use of electronic systems inside espresso coffee machines, new technical solutions have appeared on the market able to automatically and accurately control the pressurisation process of the coffee layer. Two recent technical solutions for pressurising the coffee layer are disclosed, for example, in WO 2017/068021 and EP 2314183.

In WO 2017/068021 the pressure regulation mechanism is performed by the use of a plurality of pumping systems. These pumping systems, in addition to working in cascade, are specialised for each dispensing unit, as document WO 2017/068021 illustrates in particular a professional espresso coffee machine for coffee bars provided with a plurality of dispensing units.

This technical solution notably increases the complexity and the cost of the hydraulic circuit of the espresso coffee machine. For example, for an espresso coffee machine with three dispensing units at least four pumping systems must be used, i.e. a booster pump and an individual pressure regulation pump for each dispensing unit. All the pumping systems must be controlled by a rather complex electronic control system, able to vary the rotation speed of each motor coupled with the respective pumping bodies so as to obtain the independent pressure variation of each dispensing unit.

In EP 2314183 the pressure adjustment is obtained by changing the flow rate which is adjusted through a proportional valve. The proportional valve is able to electronically adjust the flow rate of the hydraulic circuit in which it is inserted.

This second technical solution also has various limitations. The most important one comes from the fact that the proportional valve operates, in practice, like a variable throttle valve. In other words, when faced with a pressure variation request, the proportional valve is not able to do anything other than vary the flow rate of the hydraulic circuit. These proportional valves have notable maximum flow rate limits, since for functional reasons they are sized on very small passage orifices, typically with diameters of around 1-1.5 mm, to obtain for example the low pressures such as those necessary for the pre-brewing step (1-1.5 bar). Since these proportional valves have the maximum pressure determined by the calibration of the pump (typically even 12 bar) at their inlet, they are forced to operate in a lower range of flow rates than those necessary for the optimal extraction of the coffee.

In fact, if the example of the lever machine as described in CH 262232 is considered, it allows in the pre-brewing step, upon lifting the piston for loading the brewing chamber with the right amount of water, the pressure to be kept around the pressure level of the boiler (1-1.5 bar) but without any flow rate limit. The coffee layer is soaked uniformly thanks to the good flow rate of water which instantaneously floods the whole surface of the layer itself, while remaining within the desired pressure limits.

In the event, instead, of espresso coffee machines that use a proportional valve as a flow rate limiter, it is not practically possible to perform the same pre-brewing step with low pressure but maximum flow rate, as the flow rate is limited by the throttling in the proportional valve itself. Performing a pre-brewing step, although at low pressure, but with an insufficient flow rate, such as not to allow an immediate flooding of the whole surface of the coffee layer, can create preferential routes for the passage of water through the coffee layer itself, consequently creating non-optimal extraction.

Document WO 2015/056241 discloses an espresso coffee machine comprising a main boiler 3, configured for producing hot water and steam; a dispensing group 2, configured for producing coffee and physically and functionally independent from said main boiler; a secondary boiler 8 physically and hydraulically connected to the dispensing group, said secondary boiler being configured to keep the water for dispensing coffee at a predetermined temperature value checked by a temperature probe; a main water inlet circuit for inletting water from the water supply network, hydraulically connected to the main boiler and to the secondary boiler of the dispensing group, said main water inlet circuit comprising a booster pump 5 that applies a predetermined pressure value to the water; and an electronic control unit 19, further comprising a pressure sensor 50, provided with a sensitive element enclosed within the secondary boiler of the dispensing group and placed in contact with the water.

The aim of the present invention is therefore that of providing a device and a process for controlling the extraction pressure of coffee in an espresso coffee machine that are able to solve the drawbacks of the prior art mentioned above in an extremely simple, cheap and particularly functional way.

In detail, it is an object of the present invention to provide an espresso coffee machine in which the adjustment of the extraction pressure, in all the beverage dispensing steps, can be performed either through a direct manual command, or through an automatic pre-set and electronically managed cycle.

Another object of the present invention is that of providing an espresso coffee machine in which it is possible to obtain control of the extraction pressure using a single pumping system, also in the event in which the espresso coffee machine is provided with various dispensing groups working simultaneously.

Another object of the present invention is that of providing an espresso coffee machine that is able to guarantee the control of the extraction pressure without any flow-rate limitation of the brewing water throughout all the dispensing steps, including the more delicate pre-brewing step.

Yet another object of the present invention is that of realising an espresso coffee machine that allows high precision and efficiency of the extraction pressure control process, thanks to a relationship between the operation of the pumping system and that of the electronically controlled individual bypass valves, which split the pressure level between each dispensing group.

These and other aims according to the present invention are achieved by providing an espresso coffee machine as described in claim 1.

Further characteristics of the invention are highlighted in the dependent claims, which are an integral part of the present description.

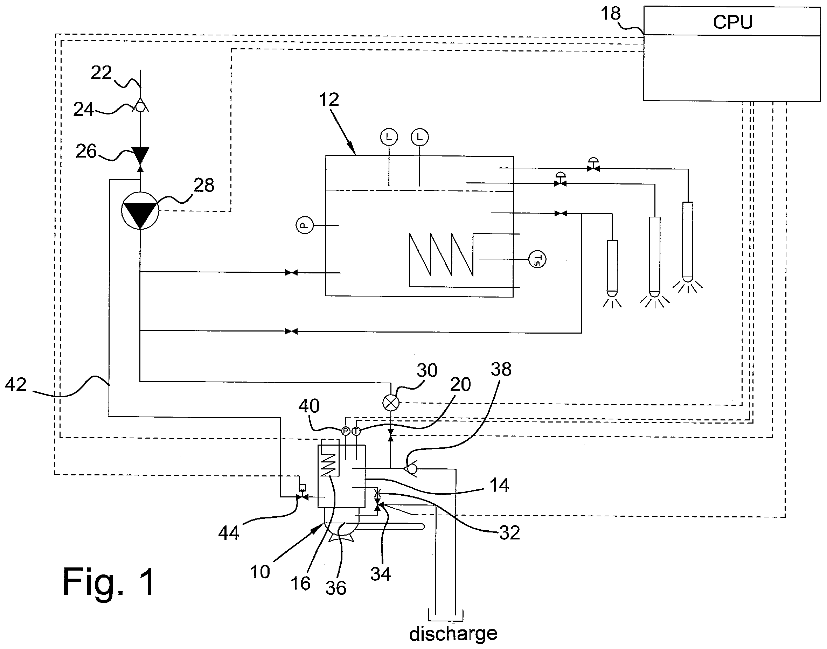

The characteristics and advantages of an espresso coffee machine according to the present invention shall become clearer from the following exemplifying and nonlimiting description, with reference to the accompanying schematic drawings, in which the only figure schematically shows the hydraulic and electronic circuits of such espresso coffee machine.

With reference to the figure, the hydraulic and electronic circuits, as well as the main components, of the espresso coffee machine according to the present invention, are shown. The espresso coffee machine comprises at least one dispensing group 10, provided for producing the coffee and physically and functionally independent from a main boiler 12, provided for producing hot water and steam.

The temperature control of the water for producing the coffee is performed according to a known way, described for example in IT 1131532. In practice, each dispensing group 10 is physically and hydraulically connected to a small secondary boiler 14 provided to keep the water for dispensing coffee at a predetermined temperature value, considered suitable for making the beverage. Such predetermined temperature value is obtained through the controlled activation of at least one heating element 16, belonging to the secondary boiler 14 of each dispensing group 10 and appropriately controlled by an electronic control unit 18 of the espresso coffee machine. The electronic control unit 18 receives an input temperature signal, identified by a temperature probe 20 provided with a sensitive element enclosed within the secondary boiler 14 of each dispensing group 10 and placed in contact with the single-phase fluid consisting of the water.

A main water inlet circuit 22 for inletting water from the water supply network is hydraulically connected to the main boiler 12, and to the secondary boiler 14 of each dispensing group 10. Along the main water inlet circuit 22 at least one non-return valve 24 and at least one pressure reducing device 26 are arranged in sequence, normally calibrated at 1 bar, which stabilises the base operating pressure value of the hydraulic circuit and compensates for any possible pressure variations in the water coming from the water supply network. Along the main water inlet circuit 22, downstream of the pressure reducing device 26, at least one booster pump 28, at least one flow meter 30 and at least one throttling nozzle 32 are also arranged in sequence.

The throttling nozzle 32 calibrates the maximum flow rate of water entering into a respective dispensing group 10 through a dispensing valve 34, that in turn determines the start and the end of dispensing, making the brewing water pass from the secondary boiler 14 of each dispensing group 10 to a brewing chamber 36 of said dispensing group 10. The brewing chamber 36 of each dispensing group 10 comprises, in a known way, a water diffusion shower head, a filter containing the coffee powder and the related filter holder. The dispensing valve 34 is typically a 3-way solenoid valve that, in the deactivation step, puts the brewing chamber 36 in communication with a duct at atmospheric pressure, so as to discharge the residual overpressure of the brewing chamber 36 that is generated at the end of the dispensing of the beverage.

The secondary boiler 14 of each dispensing group 10 is hydraulically connected to a mechanical overpressure safety valve 38, configured to activate in the case in which, due to the heating of the water with consequent increase in volume, there is a pressure increase that goes beyond a predetermined maximum pressure value, i.e. the maximum operating value of the hydraulic circuit intended for producing the espresso coffee. Typically, this maximum pressure value must not exceed 13 bar.

According to the invention, the process of adjusting the coffee extraction pressure involves the electronic control unit 18, the booster pump 28, which applies a predetermined pressure value to the water, and a pressure sensor 40, provided with a sensitive element enclosed within the secondary boiler 14 of each dispensing group 10 and placed in contact with the single-phase fluid consisting of water. The espresso coffee machine further comprises a bypass circuit 42 hydraulically connected, at a first end, to the main water inlet circuit 22 upstream of the booster pump 28, preferably between the pressure reducing device 26 and such booster pump 28, and, to each dispensing group 10 at the opposite end.

The bypass circuit 42 is provided with at least one two-way proportional valve 44, electronically controlled by the electronic control unit 18 and having a specific bypass function. The two-way proportional valve 44 is, in fact, configured to recirculate a part of delivery flow of the booster pump 28 itself on the main water inlet circuit 22 at low pressure and upstream of the booster pump 28, in order to maintain a certain coffee extraction pressure value in each dispensing group 10 set in real time by the pressure sensor 40.

More in detail, when the dispensing of the beverage is requested, the booster pump 28, which takes water from the main water supply network through the main water inlet circuit 22, and the dispensing valve 34, which makes the brewing water pass from the secondary boiler 14 of each dispensing group 10 to the brewing chamber 36 of said dispensing group 10, are activated simultaneously. The pressure sensor 40 monitors in real time the pressure value that is generated inside the secondary boiler 14 of each dispensing group 10, which is in hydraulic communication with the respective brewing chamber 36. Since water is an incompressible liquid, the pressure value between the secondary boiler 14 of each dispensing group 10 and the brewing chamber 36 is univocal.

It is therefore possible to control and vary in real time the extraction pressure value by acting through the controlled modulation of the two-way proportional bypass valve 44. This two-way proportional bypass valve 44, being arranged on the bypass circuit 42 that constitutes a derivation of the main delivery flow of the brewing chamber 36, has the ability to influence the coffee extraction pressure without creating any further throttling on the main water inlet circuit 22 which infuses the coffee layer. This control also has the advantage of operating with very quick response times, as even limited water flows, recirculating through the bypass circuit 42 and the two-way proportional bypass valve 44, are sufficient to significantly vary the pressure value of the main flow.

Based on a first operating mode of the espresso coffee machine, the pressure variation can take place through a manual control by an operator. Using a control device (not shown), functionally connected to the electronic control unit 18, the operator can increase or reduce the recirculation flow quantity by means of the two-way proportional bypass valve 44. The operator can therefore have display feedback on the pressure through the electronic control unit 18, which communicates with the pressure sensor 40.

In order to be able to operate in all the water supply configurations, the two-way proportional bypass valve 44 needs a pressure reducing device 26 appropriately calibrated so that the water inlet pressure is lower than the minimum extraction pressure. It is in fact known that in some water supply networks the supply pressure can reach high levels, comprised between 4 bar and 6 bar.

A second operating mode of the espresso coffee machine envisages storing, inside the electronic control unit 18, a set of predetermined pressure curves that the espresso coffee machine is capable of reproducing autonomously with the simple activation of the beverage dispensing command. A third operating mode of the espresso coffee machine finally envisages a self-learning step, by the electronic control unit 18, of one or more pressure values set manually by the operator, which are stored automatically within a set of predetermined pressure curves so that each predetermined pressure value can then be reproduced automatically and repetitively by the espresso coffee machine.

Thus, it has been seen that the espresso coffee machine according to the present invention achieves the aim and objects set forth above. The espresso coffee machine according to the present invention allows the extraction profile of lever machines to be reproduced faithfully, automated and controlled, overcoming the limits of the systems described in WO 2017/068021 and EP 2314183. These lever machines are still recognised by persons skilled in the art as one of the best systems for producing espresso coffee, still being present on the market.

The espresso coffee machine according to the present invention thus conceived is susceptible to many modifications and variants, all falling within the same inventive concept; furthermore, all the details can be replaced by technically equivalent elements. The materials used, as well as the shapes and dimensions, may in practice be of any type according to technical requirements.

The protective scope of the invention is therefore defined by the appended claims.

## Claims

1. Espresso coffee machine comprising:
- a main boiler (12), configured for producing hot water and steam;
- at least one dispensing group (10), configured for producing coffee and physically and functionally independent from said main boiler (12);
- a secondary boiler (14) physically and hydraulically connected to each dispensing group (10), said secondary boiler (14) being configured to keep the water for dispensing coffee at a predetermined temperature value checked by a temperature probe (20) ;
- a main water inlet circuit (22) for inletting water from the water supply network, hydraulically connected to the main boiler (12) and to the secondary boiler (14) of each dispensing group (10), said main water inlet circuit (22) comprising at least one booster pump (28) that applies a predetermined pressure value to the water; and
- an electronic control unit (18),
the espresso coffee machine being **characterised in that** it comprises:
- a pressure sensor (40), provided with a sensitive element enclosed within the secondary boiler (14) of each dispensing group (10) and placed in contact with the water;
- a bypass circuit (42) hydraulically connected, at a first end, to said main water inlet circuit (22) upstream of the booster pump (28) and, at the opposite end, to each dispensing group (10); and
- at least one two-way proportional valve (44), arranged on the bypass circuit (42) and electronically controlled by the electronic control unit (18), said two-way proportional valve (44) being configured to recirculate a part of delivery flow of said booster pump (28) on said main water inlet circuit (22) and upstream of the booster pump (28), in order to maintain a certain coffee extraction pressure value in each dispensing group (10) set in real time by the pressure sensor (40).

2. Espresso coffee machine according to claim 1, **characterised in that** the secondary boiler (14) of each dispensing group (10) is provided with at least one heating element (16) controlled by the electronic control unit (18) to keep the water for dispensing coffee at said predetermined temperature value.

3. Espresso coffee machine according to claim 1 or 2, **characterised in that** said main water inlet circuit (22) comprises at least one non-return valve (24), arranged upstream of the booster pump (28).

4. Espresso coffee machine according to claim 3, **characterised in that** said main water inlet circuit (22) comprises at least one pressure reducing device (26), arranged downstream of the non-return valve (24) and upstream of the booster pump (28).

5. Espresso coffee machine according to any claims 1 to 4, **characterised in that** said main water inlet circuit (22) comprises at least one flow meter (30), arranged downstream of the booster pump (28).

6. Espresso coffee machine according to any claims 1 to 5, **characterised in that** said main water inlet circuit (22) comprises at least one throttling nozzle (32), arranged downstream of the booster pump (28), said throttling nozzle (32) calibrating the maximum flow rate of water entering into a respective dispensing group (10) through a dispensing valve (34), that in turn determines the start and the end of dispensing, making the brewing water pass from the secondary boiler (14) of each dispensing group (10) to a brewing chamber (36) of said dispensing group (10).

7. Espresso coffee machine according to claim 6, **characterised in that** the dispensing valve (34) is a 3-way solenoid valve that, in the deactivation step, puts the brewing chamber (36) in communication with a duct at atmospheric pressure, so as to discharge the residual overpressure of the brewing chamber (36) that is generated at the end of the dispensing of the beverage.

8. Espresso coffee machine according to any claims 1 to 7, **characterised in that** the secondary boiler (14) of each dispensing group (10) is hydraulically connected to a mechanical overpressure safety valve (38), configured to activate in the case in which, due to the heating of the water with consequent increase in volume, there is a pressure increase that goes beyond a predetermined maximum pressure value.

9. Process for controlling the coffee extraction pressure in an espresso coffee machine according to any claims 1 to 8, the process comprising the steps of:
- taking water from the water supply network through the booster pump (28) and the main water inlet circuit (22);
- introducing the water into at least one dispensing group (10);
- heating the water to a predetermined temperature value through the secondary boiler (14) of said dispensing group (10);
- monitoring in real time, through the pressure sensor (40), the pressure value that is generated inside the secondary boiler (14) of said dispensing group (10);
- adjusting said pressure value in real time through the controlled modulation of the two-way proportional bypass valve (44), which recirculates a part of delivery flow of said booster pump (28) on said main water inlet circuit (22) through the bypass circuit (42) .

10. Process according to claim 9, **characterised in that** the step of adjusting said pressure value in real time is carried out through a manual control by an operator.

11. Process according to claim 9, **characterised in that** it comprises a step of storing inside the electronic control unit (18) a set of predetermined pressure curves that the espresso coffee machine is capable of reproducing autonomously when the beverage dispensing command is activated.

12. Process according to claim 9, **characterised in that** it comprises a self-learning step, by the electronic control unit (18), of one or more pressure values set manually by an operator, said one or more pressure values being stored automatically within a set of predetermined pressure curves so that each predetermined pressure value can then be reproduced automatically and repetitively by the espresso coffee machine.

## Patentansprüche

1. Espresso-Kaffeemaschine, umfassend:
- einen Hauptkocher (12), der konfiguriert ist, heißes Wasser und Dampf zu erzeugen;
- wenigstens eine Ausgabegruppe (10), die konfiguriert ist, Kaffee zu erzeugen, und die von dem Hauptkocher (12) physisch und funktionstechnisch unabhängig ist;
- einen zusätzlichen Kocher (14), der mit jeder Ausgabegruppe (10) physisch und hydraulisch verbunden ist, wobei der zusätzliche Kocher (14) konfiguriert ist, das Wasser zum Ausgeben von Kaffee auf einem vorbestimmten Temperaturwert zu halten, der durch einen Temperatursensor (20) geprüft wird;
- einen Hauptwassereinlasskreis (22) zum Einlassen von Wasser aus dem Wasserversorgungsnetz, der mit dem Hauptkocher (12) und mit dem zusätzlichen Kocher (14) jeder Ausgabegruppe (10) hydraulisch verbunden ist, wobei der Hauptwassereinlasskreis (22) wenigstens eine Verstärkerpumpe (28) umfasst, die das Wasser mit einem vorbestimmten Druckwert beaufschlagt; und
- eine elektronische Steuereinheit (18),
wobei die Espresso-Kaffeemaschine **dadurch gekennzeichnet ist, dass** sie umfasst:
- einen Drucksensor (40), der mit einem sensitiven Element versehen ist, das im zusätzlichen Kocher (14) jeder Ausgabegruppe (10) eingeschlossen ist und in Kontakt mit dem Wasser angeordnet ist;
- einen Umgehungskreis (42), der an einem ersten Ende mit dem Hauptwassereinlasskreis (22) stromaufwärts der Verstärkerpumpe (28) und an dem gegenüberliegenden Ende mit jeder Ausgabegruppe (10) hydraulisch verbunden ist; und
- wenigstes ein Zweiwege-Proportionalventil (44), das in dem Umgehungskreis (42) angeordnet ist und durch die elektronische Steuereinheit (18) elektronisch gesteuert wird, wobei das Zweiwege-Proportionalventil (44) so konfiguriert ist, dass es einen Teil der Zulaufströmung der Verstärkerpumpe (28) an dem Hauptwassereinlasskreis (22) und stromaufwärts der Verstärkerpumpe (28) zurückführt, um einen bestimmten Kaffeeextraktionsdruckwert in jeder Ausgabegruppe (10) aufrechtzuerhalten, der durch den Drucksensor (40) in Echtzeit festgelegt wird.

2. Espresso-Kaffeemaschine nach Anspruch 1, **dadurch gekennzeichnet, dass** der zusätzliche Kocher (14) jeder Ausgabegruppe (10) mit wenigstens einem Heizelement (16) versehen ist, das durch die elektronische Steuereinheit (18) gesteuert wird, um das Wasser zum Ausgeben von Kaffee auf dem vorbestimmten Temperaturwert zu halten.

3. Espresso-Kaffeemaschine nach Anspruch 1 oder 2, **dadurch gekennzeichnet, dass** der Hauptwassereinlasskreis (22) wenigstens ein Rückschlagventil (24) umfasst, das stromaufwärts der Verstärkerpumpe (28) angeordnet ist.

4. Espresso-Kaffeemaschine nach Anspruch 3, **dadurch gekennzeichnet, dass** der Hauptwassereinlasskreis (22) wenigstens eine Druckreduzierungsvorrichtung (26) umfasst, die stromabwärts des Rückschlagventils (24) und stromaufwärts der Verstärkerpumpe (28) angeordnet ist.

5. Espresso-Kaffeemaschine nach einem der Ansprüche 1 bis 4, **dadurch gekennzeichnet, dass** der Hauptwassereinlasskreis (22) wenigstens einen Durchflussmesser (30) umfasst, das stromabwärts der Verstärkerpumpe (28) angeordnet ist.

6. Espresso-Kaffeemaschine nach einem der Ansprüche 1 bis 5, **dadurch gekennzeichnet, dass** der Hauptwassereinlasskreis (22) wenigstens eine Drosseldüse (32) umfasst, die stromabwärts der Verstärkerpumpe (28) angeordnet ist, wobei die Drosseldüse (32) die maximale Durchflussmenge von Wasser kalibriert, das in eine entsprechende Ausgabegruppe (10) durch ein Ausgabeventil (34) eintritt, das wiederum den Start und das Ende der Ausgabe bestimmt, wodurch das Brühwasser von dem zusätzlichen Kocher (14) jeder Ausgabegruppe (10) zu einer Brühkammer (36) der Ausgabegruppe (10) gelangt.

7. Espresso-Kaffeemaschine nach Anspruch 6, **dadurch gekennzeichnet, dass** das Ausgabeventil (34) ein 3-Wege-Magnetventil ist, das in dem Deaktivierungsschritt die Brühkammer (36) in Kommunikation mit einer Leitung auf Atmosphärendruck bringt, um den verbleibenden Überdruck der Brühkammer (36) abzuführen, der am Ende der Ausgabe des Getränks erzeugt wird.

8. Espresso-Kaffeemaschine nach einem der Ansprüche 1 bis 7, **dadurch gekennzeichnet, dass** der zusätzliche Kocher (14) jeder Ausgabegruppe (10) mit einem mechanischen Überdruck-Sicherheitsventil (38) hydraulisch verbunden ist, das so konfiguriert ist, dass es in dem Fall aktiviert wird, wenn wegen des Erhitzens des Wassers mit der daraus folgenden Volumenzunahme eine Druckerhöhung erfolgt, die einen vorbestimmten maximalen Druckwert übersteigt.

9. Verfahren zum Steuern des Kaffeeextraktionsdrucks in einer Espresso-Kaffeemaschine nach einem der Ansprüche 1 bis 8, wobei das Verfahren die Schritte umfasst:
- Entnehmen von Wasser aus dem Wasserversorgungsnetz durch die Verstärkerpumpe (28) und den Hauptwassereinlasskreis (22);
- Einleiten des Wassers in wenigstens eine Ausgabegruppe (10);
- Erhitzen des Wassers auf einen vorbestimmten Temperaturwert durch den zusätzlichen Kocher (14) der Ausgabegruppe (10);
- Überwachen des Druckwerts, der im Inneren des zusätzlichen Kochers (14) der Ausgabegruppe (10) erzeugt wird, in Echtzeit durch den Drucksensor (40);
- Einstellen des Druckwerts in Echtzeit durch die gesteuerte Modulation des proportionalen Zweiwege-Bypass-Ventils (44), das einen Teil der Zulaufströmung der Verstärkerpumpe (28) an dem Hauptwassereinlasskreis (22) durch den Umgehungskreis (42) rückführt.

10. Verfahren nach Anspruch 9, **dadurch gekennzeichnet, dass** der Schritt zum Einstellen des Druckwerts in Echtzeit durch eine manuelle Steuerung durch eine Bedienungsperson ausgeführt wird.

11. Verfahren nach Anspruch 9, **dadurch gekennzeichnet, dass** es einen Schritt zum Speichern eines Satzes von vorbestimmten Druckkurven, die die Espresso-Kaffeemaschine autonom reproduzieren kann, wenn der Getränkeausgabebefehl aktiviert wird, in der elektronischen Steuereinheit (18) umfasst.

12. Verfahren nach Anspruch 9, **dadurch gekennzeichnet, dass** es einen Selbstlernschritt durch die elektronische Steuereinheit (18) von einem oder mehreren Druckwerten umfasst, die durch eine Bedienungsperson manuell eingestellt werden, wobei der eine oder mehrere Druckwerte in einem Satz vorbestimmter Druckkurven automatisch gespeichert werden, so dass jeder vorbestimmte Druckwert dann automatisch und wiederholt durch die Espresso-Kaffeemaschine reproduziert werden kann.

## Revendications

1. Machine à café expresso, comprenant :
- une bouilloire principale (12) configurée pour produire de l'eau chaude et de la vapeur ;
- au moins un groupe de distribution (10) configuré pour produire du café et physiquement et fonctionnellement indépendant de ladite bouilloire principale (12) ;
- une bouilloire secondaire (14) connectée physiquement et hydrauliquement à chaque groupe de distribution (10), ladite bouilloire secondaire (14) étant configurée pour maintenir l'eau pour la distribution du café à une valeur de température prédéterminée vérifiée par une sonde de température (20) ;
- un circuit d'entrée d'eau principal (22) pour recevoir de l'eau depuis le réseau d'alimentation en eau, connecté hydrauliquement à la bouilloire principale (12) et à la bouilloire secondaire (14) de chaque groupe de distribution (10), ledit circuit d'entrée d'eau principal (22) comprenant au moins une pompe de surpression (28) qui applique une valeur de pression prédéterminée à l'eau ; et
- une unité de commande (18),
la machine à café expresso étant **caractérisée en ce qu'**elle comprend :
- un capteur de pression (40), pourvu d'un élément sensible enfermé à l'intérieur de la bouilloire secondaire (14) de chaque groupe de distribution (10) et placé en contact avec l'eau ;
- un circuit de dérivation (42) connecté hydrauliquement, à une première extrémité, audit circuit d'entrée d'eau principal (22) en amont de la pompe de surpression (28) et, à l'extrémité opposée, à chaque groupe de distribution (10) ; et
- au moins une soupape proportionnelle à deux voies (44), disposée sur le circuit de dérivation (42) et commandée électroniquement par l'unité de commande électronique (18), ladite soupape proportionnelle à deux voies (44) étant configurée pour faire recirculer une partie du flux de distribution de ladite pompe de surpression (28) sur ledit circuit d'entrée d'eau principal (22) et en amont de la pompe de surpression (28) afin de maintenir une certaine valeur de pression d'extraction de café dans chaque groupe de distribution (10), réglée en temps réel par le capteur de pression (40).

2. Machine à café expresso selon la revendication 1, **caractérisée en ce que** la bouilloire secondaire (14) de chaque groupe de distribution (10) est pourvue d'au moins un élément chauffant (16) commandé par l'unité de commande électronique (18) pour maintenir l'eau pour distribuer le café à ladite valeur de température prédéterminée.

3. Machine à café expresso selon la revendication 1 ou 2, **caractérisée en ce que** ledit circuit d'entrée d'eau principal (22) comprend au moins un clapet antiretour (24) disposé en amont de la pompe de surpression (28).

4. Machine à café expresso selon la revendication 3, **caractérisée en ce que** ledit circuit d'entrée d'eau principal (22) comprend au moins un dispositif de réduction de pression (26) disposé en aval du clapet antiretour (24) et en amont de la pompe de surpression (28).

5. Machine à café expresso selon l'une quelconque des revendications 1 à 4, **caractérisée en ce que** ledit circuit d'entrée d'eau principal (22) comprend au moins un débitmètre (30) disposé en aval de la pompe de surpression (28).

6. Machine à café expresso selon l'une quelconque des revendications 1 à 5, **caractérisée en ce que** ledit circuit d'entrée d'eau principal (22) comprend au moins une buse d'étranglement (32) disposée en aval de la pompe de surpression (28), ladite buse d'étranglement (32) calibrant le débit maximum d'eau entrant dans un groupe de distribution respectif (10) à travers une soupape de distribution (34), qui à son tour détermine le début et la fin de la distribution, en permettant à l'eau pour l'infusion de passer de la bouilloire secondaire (14) de chaque groupe de distribution (10) à une chambre d'infusion (36) dudit groupe de distribution (10).

7. Machine à café expresso selon la revendication 6, **caractérisée en ce que** la soupape de distribution (34) est une électrovanne à 3 voies qui, au cours de l'étape de désactivation, met la chambre d'infusion (36) en communication avec un conduit à la pression atmosphérique de manière à décharger la surpression résiduelle de la chambre d'infusion (36) qui est générée à la fin de la distribution de la boisson.

8. Machine à café expresso selon l'une quelconque des revendications 1 à 7, **caractérisée en ce que** la bouilloire secondaire (14) de chaque groupe de distribution (10) est connectée hydrauliquement à une soupape de sécurité de surpression mécanique (38) configurée pour s'activer au cas où, sous l'effet du chauffage de l'eau avec l'augmentation conséquente de volume, il se produit une augmentation de pression qui dépasse une valeur de pression maximale prédéterminée.

9. Procédé pour commander la pression d'extraction de café dans une machine à café expresso selon l'une quelconque des revendications 1 à 8, le procédé comprenant les étapes suivantes :
- prélever de l'eau du réseau d'alimentation en eau par le biais de la pompe de surpression (28) et du circuit d'entrée d'eau principal (22) ;
- introduire l'eau dans au moins un groupe de distribution (10) ;
- chauffer l'eau à une valeur de température prédéterminée par le biais de la bouilloire secondaire (14) dudit groupe de distribution (10) ;
- surveiller, en temps réel, par le biais du capteur de pression (40), la valeur de pression qui est générée à l'intérieur de la bouilloire secondaire (14) dudit groupe de distribution (10) ;
- ajuster ladite valeur de pression en temps réel par le biais de la modulation commandée de la soupape de dérivation proportionnelle à deux voies (44), qui recircule une partie du flux de distribution de ladite pompe de surpression (28) sur ledit circuit d'entrée d'eau principal (22) par le biais du circuit de dérivation (42) .

10. Procédé selon la revendication 9, **caractérisé en ce que** l'étape d'ajustement de ladite valeur de pression en temps réel est effectuée par une commande manuelle par un opérateur.

11. Procédé selon la revendication 9, **caractérisé en ce qu'**il comprend une étape de stockage, à l'intérieur de l'unité de commande électronique (18), d'un ensemble de courbes de pression prédéterminées que la machine à café expresso est capable de reproduire de manière autonome lorsque la commande de distribution de boissons est activée.

12. Procédé selon la revendication 9, **caractérisé en ce qu'**il comprend une étape d'auto-apprentissage, par l'unité de commande électronique (18), d'une ou plusieurs valeurs de pression réglées manuellement par un opérateur, lesdites une ou plusieurs valeurs de pression étant stockées automatiquement à l'intérieur d'un ensemble de courbes de pression prédéterminées de telle sorte que chaque valeur de pression prédéterminée puisse ensuite être reproduite automatiquement et de manière répétée par la machine à café expresso.
